Europäisches Patentamt

European Patent Office

Office européen des brevets

(11) Publication number: **0 196 097**
A2

# EUROPEAN PATENT APPLICATION

(21) Application number: **86104214.1**

(22) Date of filing: **26.03.86**

(51) Int. Cl.⁴: **H 04 N 5/91**

(30) Priority: **26.03.85  JP 59433/85**

(43) Date of publication of application: **01.10.86**
**Bulletin 86/40**

(84) Designated Contracting States: **DE GB NL**

(71) Applicant: **FUJI PHOTO FILM CO., LTD., 210 Nakanuma Minami Ashigara-shi, Kanagawa 250-01 (JP)**

(72) Inventor: **Kobayashi, Yasuhito Fuji Photo Film Co., Ltd., No. 798, Miyanodai Kaisei-cho, Ashigarakami-gun Kanagawa-ken (JP)**

(74) Representative: **Strehl, Schübel-Hopf, Groening, Schulz, Widenmayerstrasse 17 Postfach 22 03 45, D-8000 München 22 (DE)**

(54) **Method of field/frame conversion in magnetic picture recording and reproducing.**

(57)    An FM field signal is converted, in a state of an FM signal, to an FM frame signal by the combination of a delay circuit and a switch, and the FM frame signal is demodulated and then de-emphasized to provide the baseband frame signal. Noise that may be included in the FM field signal while the signal is passed through the delay circuit is removed during the stages of demodulation and de-emphasis. Also, flicker attributable to attenuation of the FM field signal by the delay circuit and also attributable to temperature dependence and secular variation of the rate of attenuation is eliminated while the signal is passed through a limiter before being demodulated.

Fuji Photo Film Co., Ltd.
EPA-27 615

1. Title of the Invention

METHOD OF FIELD/FRAME CONVERSION IN MAGNETIC PICTURE RECORDING & REPRODUCING

2. Background of the Invention

(1) Field of the Invention

This invention relates to a method of field/frame conversion in the field of magnetic picture recording, and more particularly to improvements for preventing degradation of the S/N ratio and appearance of flicker attributable to incorporation of a delay circuit in a reproducing system.

(2) Description of the Related Art

In television, the so-called interlaced scanning is employed in which a picture is scanned with horizontal scanning lines skipped at a rate of one or more lines, so as to minimize the influence of flicker perceptible to the eye. Most widely employed in this field is the 2:1 interlaced scanning in which alternate horizontal scanning lines are skipped during scanning of an even filed and an odd field. According to the 2:1 interlaced scanning, a rough picture called a field is produced by one vertical scanning, and two fields are superposed to provide a complete picture called a frame. The field repetition rate is 60 fields per second according to, for example, the NTSC standards, and, in this case, the frame repetition rate is 30 frames per second. One frame is completed generally with 525 horizontal scanning lines. The point of beginning of horizontal scanning of an odd field is displaced from that of an even field by 1/2 of one horizontal scanning period (H) or 0.5H.

In recording a video signal on a magnetic tape, a magnetic disk or any other recording medium, it is customary that a signal of one field is allotted to one track or a signal of one frame is allotted to one track. Also, the one-field/one-track recording method is classified into the so-called one-frame/two-track recording method in which an odd field and an even field constituting a frame are sequentially recorded on adjacent two tracks respectively and the so-called one-field recording method in which only one of an odd field and an even field is recorded on one track.

- 3 -

0196097

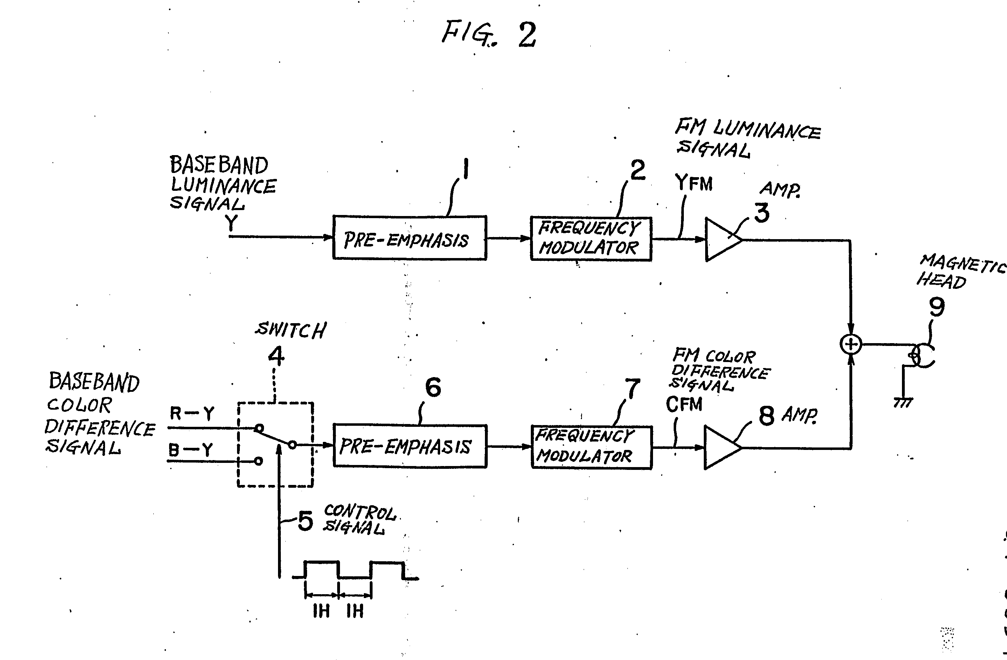

It is also customary that, in recording, at least a luminance signal Y in a video signal is subjected to pre-emphasis before being applied to a frequency modulator for frequency modulation of a carrier. Fig.2 shows schematically the structure of a recording system in an electronic still camera using a magnetic disk. Referring to Fig.2, a baseband luminance signal Y is subjected to pre-emphasis in a pre-emphasis circuit 1, and the resultant signal is applied to a modulator 2 to appear as an FM luminance signal $Y_{FM}$ in a high frequency range from the modulator 2. On the other hand, two baseband color difference signals R-Y and B-Y are alternately selected by a switch 4 at a time interval of one horizontal scanning period (1H) to appear as a line-sequential color difference signal from the switch 4 which is controlled by a swich control signal 5. The line-sequential color difference signal is subjected to pre-emphasis in a pre-emphasis circuit 6, and the resultant signal is applied to a modulator 7 to appear as an FM line-sequential color difference signal $C_{FM}$ in a low frequency range from the modulator 7. The FM luminance signal $Y_{FM}$ and the FM line-sequential color difference signal

- 4 -

0196097

$C_{FM}$ are amplified by respective amplifiers 3 and 8 and are mixed before being applied to a recording magnetic head 9. Actually, the color difference signals R-Y and B-Y modulate carriers having different center frequencies so that they can be distinguished from each other.

In the case of reproduction of a signal recorded according to the one-field recording method, the so-called field/frame conversion mode is most frequently employed in which, utilizing the strong vertical correlation of horizontal scanning lines in a video signal, the same track is scanned twice to reproduce a frame signal from a field signal of one kind. This field/frame conversion mode is intended principally to improve the recording density to enable long-time recording in the case of a movie recording and to increase the number of pictures in the case of a still recording. However, in the case of conversion from a field signal to a frame signal, the effect of interlaced scanning cannot be realized by merely repeatedly reproducing the same field signal twice. This is because mere repetition of reproduction of the same field signal twice cannot provide the relative time lag of 0.5H, although this relative time lag of 0.5H is actually required between the odd field and the even field for the purpose of attaining the effect of interlaced scanning, as will be readily seen from the relation between the vertical synchronizing signal and the horizontal synchronizing signal as well as the video signal in the individual lines.

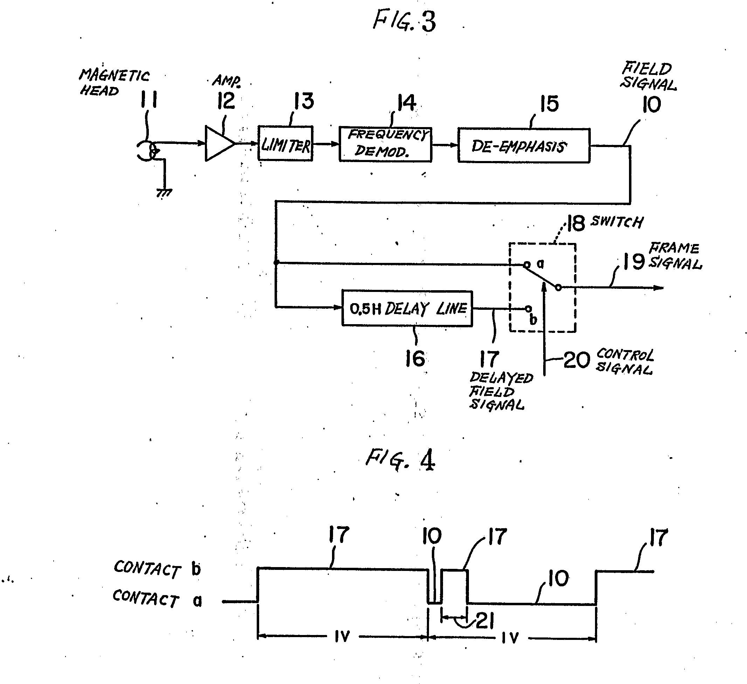

With a view to realize the effect of interlaced scanning, it is a common practice to attain conversion from a field signal to a frame signal in a manner as shown in Fig.3. Referring to Fig.3, the same field signal 10 is reproduced repeatedly by a reproducing magnetic head 11 and passed through a reproducing amplifier 12, a limiter 13, a demodulator 14 and a de-emphasis circuit 15. The field signal 10 is passed or not passed through a 0.5H delay line 16, and an analog switch 18 is controlled by a switch control signal 20 to alternately select the field signal 10 not passed through the delay line 16 (which signal 10 will be referred to hereinafter as a non-delayed signal) and the 0.5H delayed field signal 17 at a time interval of one vertical scanning period (1V), thereby converting the field signal 10 to a frame signal 19. However, when the arrangement shown in Fig.3 is employed directly, there will occur a relative time lag of 0.5H from 1V between the vertical synchronizing signals. To deal with such a trouble, a method as, for example, shown in Fig.4 is proposed for selectively changing over the contacts a and b of the analog switch 18. It will be seen in Fig.4 that, in the period allotted for selection of the non-delayed field signal 10, the portion 21 between the front equalizing pulse period and the back equalizing pulse period, is additionally allotted for selection of the 0.5H delayed field signal 17. Anyway, for the conversion from a field signal to a frame signal, a circuit as shown in Fig.3 is employed for alternate selection of the non-delayed field signal 10 and the 0.5H delayed field signal 17.

However, in the field/frame conversion circuit shown in Fig.3, the demodulated and de-emphasized, baseband field signal 10 is passed through the 0.5H delay line 16, and noise is inevitably included in the 0.5H delayed field signal 17 appearing from the 0.5H delay line 16. As a consequence, the S/N

- 7 -                0196097

ratio of the 0.5H delayed field signal 17 is degraded by 1 to 2 dB as compared to that of the non-delayed field signal 10. Further, since attenuation by the delay line 16 is inevitable, there occurs a level difference between the non-delayed field signal 10 and the 0.5H delayed field signal 17, resulting in appearance of flicker. Even when an amplifier is connected to the output of the delay line 16 to adjust the level of the delayed field signal 17, appearance of the flicker cannot be completely avoided because of secular variations and temperature dependences of the amplifier and delay line 16.

3. Summary of the Invention

With a view to solve the prior art problem pointed out above, it is a primary object of the present invention to provide an improved method of field/frame conversion which is effective for preventing degradation of the S/N ratio and appearance of flicker.

In accordance with the present invention which attains the above object, there is provided a method of field/frame conversion comprising the steps of repeatedly reproducing an FM field signal from the magnetic recording

- 8 -

0196097

medium having the FM field signal recorded thereon, applying the reproduced FM field signal to a delay circuit delaying an input by 1/2 of one horizontal scanning period (0.5H), alternately selecting the 0.5H-delayed FM field signal and the non-delayed FM field signal by changing over a switch at a time interval of one vertical scanning period (1V), demodulating the output signal of the switch, and applying the demodulated signal to a de-emphasis circuit, whereby the field signal is converted to a frame signal.

4.  Brief Description of the Drawings

Fig.1 is a block diagram showing diagrammatically the structure of a reproducing system preferably used for carrying out an embodiment of the method of field/frame conversion according to the present invention.

Fig.2 is a block diagram showing schematically the structure of one form of a recording system.

Fig.3 is a block diagram showing schematically the structure of a prior art field/frame conversion circuit.

Fig.4 illustrates the operation of the field/frame conversion switch 18 shown in Fig.3.

In the drawings:

11 designates a magnetic head;

12 designates a reproducing amplifier;

13, 23, 28 and 32 designate limiters;

14 and 33 designate frequency demodulators;

15 and 34 designate de-emphasis circuits;

18 and 30 designate field/frame conversion switches; and

24 and 29 designate 0.5H delay lines.

5. Description of the Preferred Embodiment

The principle of the present invention will be first described.

Noise which may be included in an FM field signal is removed from the FM field signal when the signal is demodulated and then de-emphasized. Therefore, when an FM field signal is converted to a frame signal in the FM signal form, noise that may be included in the FM field signal while the signal passes through a delay circuit delaying the signal by 1/2 of one horizontal scanning period is removed in the course of demodulation and de-emphasis, and the S/N ratio of the delayed baseband field signal becomes equal to that of the non-delayed baseband field signal. Also, since a limiter is generally disposed in a stage preceding an frequency demodulator, the adverse effect of undesirable attenuation of the signal by the 0.5H delay circuit as well as the adverse effect of temperature dependence and secular variation of the delay circuit can be removed by the limiter, thereby preventing appearance of flicker.

A preferred embodiment of the method according to the present invention will now be described.

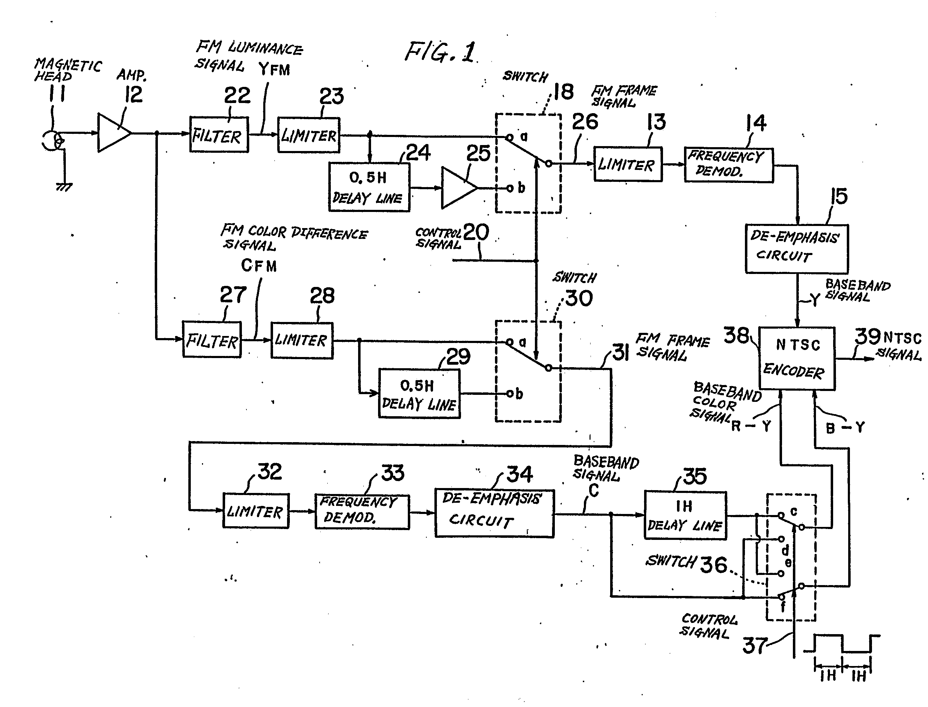

Fig.1 shows diagrammatically the structure of a reproducing system preferably used for carrying out an embodiment of the method of the present invention. The reproducing system shown in Fig.1 corresponds to the recording system described already with reference to Fig.2.

Referring to Fig.1, an FM field signal repeatedly reproduced by a reproducing magnetic head 11 is applied, after being amplified by a reproducing amplifier 12, to filters 22 and 27 to be separated into an FM luminance signal $Y_{FM}$ and an FM line-sequential color difference signal $C_{FM}$ .

The FM luminance signal $Y_{FM}$ from the filter 22 is passed through a limiter 23. The output signal of the limiter 23 is applied, on one hand, directly to one of contacts or a contact $\underline{a}$ of a field/frame conversion switch 18 and applied, on the other hand, to the other contact $\underline{b}$ of the switch 18 through a 0.5H delay line 24 and an amplifier 25 having a gain of about 20 dB. The limiter 23 is provided so that an excessively large signal may not be applied to the 0.5H delay line 24. The function of the amplifier 25 is to compensate attenuation of the FM luminance signal $Y_{FM}$ passed through the wide-band delay line 24. The 0.5H delay line 24 is, for example, a delay line utilizing a CCD or that utilizing glass. The FM luminance signal $Y_{FM}$ is converted to a frame signal 26 as a result of alternate selection of the non-delayed and delayed field signals by the switch 18 at a time interval of one vertical scanning period (1V). The FM luminance signal $Y_{FM}$ converted to the FM frame signal 26 is applied through a limiter 13 to a frequency demodulator 14 to be demodulated, and the output signal of the demodulator 14 is applied to a de-emphasis circuit 15 having a characteristic corresponding to that of the pre-emphasis circuit 1 in the recording system shown in Fig.2, to appear as the baseband luminance signal Y. Thus, degradation of the S/N ratio and appearance of flicker attributable to the signal delay in the 0.5H delay line 24 can be prevented.

On the other hand, the FM line-sequential color difference signal $C_{FM}$ from the filter 27 is similarly passed through a limiter 28. The output signal of the limiter 28 is similarly applied, on one hand, directly to one of contacts or a contact a of a field/frame conversion switch 30 and applied, on the other hand, to the other contact b of the switch 30 through a 0.5H delay line 29. This delay line 29 is, for example, a delay line utilizing a CCD. The FM line-sequential color difference signal $C_{FM}$ is converted to an FM frame signal 31 as a result of alternate selection of the non-delayed and delayed field signals by the switch 30 at a time interval of 1V. The FM frame signal 31 converted from the FM line-sequential color difference signal $C_{FM}$ is applied through a limiter 32 to a frequency demodulator 33 to be demodulated, and the output signal of the demodulator 33 is applied to a de-emphasis circuit 34 having a characteristic corresponding to that of the pre-emphasis circuit 6 in the recording system shown in Fig.2, to appear as the baseband line-sequential color difference signal C. Thus, degradation of the S/N ratio and appearance of flicker attributable to the signal delay in the 0.5H delay line 29 can be prevented. The line-sequential color difference signal C is separated into the two color difference signals R-Y and B-Y by the combination of a 1H delay line 35 and a simultaneous switch 36. Contacts c, f and contacts d, e of the simultaneous switch 36 are selected at a time interval of 1H under control of a control signal 37. Thus, those portions of the color difference signals having been lacked out at the time interval of 1H during recording are complemented to provide the continuous color difference signals R-Y and B-Y.

The baseband luminance signal Y and the two baseband color difference signals R-Y and B-Y reproduced in the manner described above are converted to an NTSC signal 39 by an NTSC encoder 38 as required, and the NTSC signal 39 is applied to a television receiver or a monitor television set.

In the embodiment described with reference to Fig.1, the output of the reproducing magnetic head 11 is separated into the FM luminance signal $Y_{FM}$ and the FM line-sequential color difference signal $C_{FM}$ , and these signals are then separately subjected to the field/frame conversion. However, when a 0.5H delay line having a sufficiently wide frequency characteristic is used, the signals $Y_{FM}$ and $C_{FM}$ mixed together may be converted to a frame signal and may then be separated from each other by filters. The separated signals may then be separately subjected to demodulation and de-emphasis. Also, one of the FM luminance signal $Y_{FM}$ and the FM line-sequential color difference signal $C_{FM}$ , for example, the FM line-sequential color difference signal $C_{FM}$ may only be converted to a frame signal before being demodulated, and the other signal, for example, the FM luminance signal $Y_{FM}$ may be converted to a frame signal after demodulation but before de-emphasis.

It will be understood from the foregoing detailed description of the present invention that a field signal is converted to a frame signal in the state of an FM signal. Therefore, noise that may be included in the field signal while the signal is delayed by a 0.5H delay circuit is removed in the later stages of demodulation and de-emphasis, so that degradation of the S/N ratio can be prevented. Also, flicker occurred hitherto due to the signal delay in the 0.5H delay circuit is eliminated while the signal is passed through a limiter before being frequcney demodulated. The technique of field/frame conversion according to the present invention is effectively applicable not only to a reproducing system in an electronic camera using a magnetic disk, but also to any one of various magnetic recording and reproducing systems, such as, an FM luminance signal reproducing system in a VTR.

0196097

CLAIMS

1. A method of field/frame conversion comprising the steps of repeatedly reproducing an FM field signal from a magnetic recording medium having the FM field signal recorded thereon, applying the reproduced FM field signal to a delay circuit delaying an input by 1/2 of one horizontal scanning period (0.5H), alternately selecting the 0.5H-delayed FM field signal and the non-delayed FM field signal by changing over a switch at a time interval of one vertical scanning period (1V), demodulating the output signal of said switch, and applying the demodulated signal to a de-emphasis circuit, whereby the field signal is converted to a frame signal.

2. A method of field/frame conversion as claimed in Claim 1, wherein said FM field signal is one of an FM luminance signal and an FM line-sequential color difference signal.

3. A method of field/frame conversion as claimed in Claim 1, wherein said FM field signal reproduced from said magnetic recording medium includes an FM luminance signal and an FM line-sequential color difference signal, and,

0196097

after separation of said FM luminance signal and said FM line-sequential color difference signal from each other, said FM luminance signal and FM line-sequential color difference signal are converted to frame signals independently of each other.

4. A method of field/frame conversion as claimed in Claim 1, wherein said FM field signal reproduced from said magnetic recording medium includes an FM luminance signal and an FM line-sequential color difference signal, and, after conversion of said FM field signal to an FM frame signal by the combination of a delay circuit and a switch, said FM luminance signal and said FM line-sequential color difference signal are separated from each other and then demodulated and de-emphasized independently of each other.

FIG. 1

# FIG. 2

BASEBAND LUMINANCE SIGNAL Y

PRE-EMPHASIS 1

FREQUENCY MODULATOR 2

FM LUMINANCE SIGNAL YFM

AMP. 3

SWITCH 4

BASEBAND COLOR DIFFERENCE SIGNAL R—Y B—Y

5 CONTROL SIGNAL

IH IH

PRE-EMPHASIS 6

FREQUENCY MODULATOR 7

FM COLOR DIFFERENCE SIGNAL CFM

8 AMP.

MAGNETIC HEAD 9

2/3

0196097

FIG. 3

FIG. 4